# EUROPEAN PATENT APPLICATION

(11) **EP 4 851 907 A1**
(43) Date of publication of application: **09.12.2026**
(21) Application number: 26182710.9
(22) Date of filing: 02.06.2026
(51) Int. Cl.: G06Q 30/0251

(54) **DEVICE, OPERATING METHOD OF DEVICE AND NON-TRANSITORY RECORDING MEDIUM**

(30) Priority: 05.06.2025 KR 20250073375
(71) Applicant: LG Electronics Inc., Yeongdeungpo-gu Seoul 07336 (KR)
(72) Inventor: KANG, Moojin, 07796 Seoul (KR); KIM, Sukyoung, 07796 Seoul (KR)
(74) Representative: Vossius & Partner Patentanwälte Rechtsanwälte mbB

(57) **Abstract**

A device according to one embodiment of the present disclosure, may comprise a display; a communication interface configured to communicate with a server providing an dvertisement; and a processor configured to: obtain a plurality of keywords tagged to a user, display a keyword list including the obtained plurality of keywords and a confidence of the keyword list generated based on the plurality of keywords on the display, and request an advertisement content corresponding to at least one keyword among the plurality of keywords to the server through the communication interface.

## Description

### BACKGROUND OF THE INVENTION

### 1.Field of the Invention

The present invention relates to a device, and more particularly, to a device for providing targeted advertisement.

### 2. Discussion of the Related Art

In existing advertisement platforms, the audience is classified only by predefined category criteria such as gender, age, and interests, and based on these criteria, advertisers set user group belonging to specific category and pre-select and register advertisement content that matches that.

In other words, existing advertisement platforms matched audience and advertisement content only with pre-defined category and sent out advertisement content matched to the corresponding audience.

However, conventional advertisement delivery methods have the problem that it is difficult to precisely target advertisement to the target audience, and that the advertisement effectiveness of advertiser is low due to inaccurate targeting.

Additionally, advertiser may not be able to deliver their advertisment to the exact audience they want, and users may be exposed to their advertisments that are not of interest to them.

### SUMMARY OF THE INVENTION

The purpose of the present disclosure may be to provide targeted advertisements by directly tagging the audience with keyword desired by the advertiser.

The purpose of the present disclosure may be to execute advertisements by distinguishing the audience desired by the advertiser.

The purpose of this disclosure may be to capitalize on keywords that form the basis of advertisement provision and to provide proof and transparency for keywords.

The purpose of this disclosure may be to construct an advertisement token ecosystem that rewards advertisers, taggers (attachers), and audiences through tokens and smart contracts.

A device according to one embodiment of the present disclosure may comprise a display; a communication interface configured to communicate with a server providing an dvertisement; and a processor configured to: obtain a plurality of keywords tagged to a user, display a keyword list including the obtained plurality of keywords and a confidence of the keyword list generated based on the plurality of keywords on the display, and request an advertisement content corresponding to at least one keyword among the plurality of keywords to the server through the communication interface.

A method of operating a device according to one embodiment of the present disclosure, may comprise obtaining a plurality of keywords tagged to a user; displaying a keyword list including the obtained plurality of keywords and a confidence of the keyword list generated based on the plurality of keywords; and requesting an advertisement content corresponding to at least one keyword among the plurality of keywords to a server.

A non-transitory recording medium having recorded thereon a computer-readable program for executing a method of operating a device, wherein the method comprises: obtaining a plurality of keywords tagged to a user; displaying a keyword list including the obtained plurality of keywords and a confidence of the keyword list generated based on the plurality of keywords; and requesting an advertisement content corresponding to at least one keyword among the plurality of keywords to a server.

According to an embodiment of the present disclosure, a validity of a combination of keywords may be evaluated as a confidence of a keyword list including a plurality of keywords is provided.

According to an embodiment of the present disclosure, by selecting a keyword among keywords included in a keyword list that cause a decrease in the confidence of the keyword list, a confidence of the keyword list may be prevented from decreasing.

According to an embodiment of the present disclosure, since the confidence of an individual keyword and a keyword list including a plurality of keywords is provided together, even when the confidence of the keyword list is low, ineffective keyword may be selectively replaced or removed by referring to the confidence of individual keyword, so that the efficiency of target advertisement may be increased.

According to an embodiment of the present disclosure, the confidence of tagged keyword may be guaranteed and the confidence of keyword may be maintained.

### BRIEF DESCRIPTION OF THE DRAWINGS

FIG. 1 is a block diagram for illustrating elements of an artificial intelligence device according to an embodiment of the present disclosure.
FIG. 2 is a diagram for illustrating the configuration of an artificial intelligence server according to an embodiment of the present disclosure.
FIG. 3 is a flowchart for explaining an operation method of a device according to an embodiment of the present disclosure.
FIG. 4 is a sequence diagram illustrating an operation method of a system according to an embodiment of the present disclosure.
FIGS. 5A to 5H are drawings illustrating advertisement service screens provided to a user according to an embodiment of the present disclosure.
FIGS. 6A and 6B are diagrams showing changes in keyword confidence over time.
FIGS. 7A and 7B are drawings illustrating an advertiser screen according to an embodiment of the present disclosure.
FIG. 8 is a drawing for explaining a method for providing a target advertisement service according to one embodiment of the present disclosure.
FIG. 9 is a diagram for explaining a method for ensuring the confidence of keywords tagged to an audience according to one embodiment of the present disclosure.
FIG. 10 is a diagram for explaining a method for maintaining the confidence of keywords tagged to an audience according to one embodiment of the present disclosure.
FIG. 11 is a diagram illustrating a method for verifying whether an advertisement provided according to one embodiment of the present disclosure was sent to an audience having a keyword.
FIG. 12 is a flowchart for explaining an operation method of a device according to another embodiment of the present disclosure.

### DETAILED DESCRIPTION OF THE PREFERRED EMBODIMENTS

Artificial intelligence refers to the field of researching artificial intelligence or methodology to create it, and machine learning refers to the field of defining various problems dealt with in the field of artificial intelligence and researching methodology to solve them.

Machine learning is also defined as an algorithm that improves the performance of a task through consistent experience.

Artificial Neural Network (ANN) is a model used in machine learning, it may refer to an overall model with problem-solving capability that is composed of artificial neurons (nodes) that form a network through the combination of synapses.

Artificial neural network may be defined by connection pattern between neurons in different layers, a learning process that updates model parameter, and an activation function that generates output value.

An artificial neural network may include an input layer, an output layer, and optionally one or more hidden layers. Each layer may include one or more neurons, and the artificial neural network may include synapse connecting neurons. In an artificial neural network, each neuron may output the input signals input through the synapse, weight, and value of activation function for bias.

Model parameter refer to a parameter determined through learning and includes the weight of synapse connection and the bias of neurons. Hyperparameter refer to a parameter that must be set before learning in a machine learning algorithm and includes learning rate, number of repetition, mini-batch size, initialization function, etc.

The purpose of learning an artificial neural network may be seen as determining model parameter that minimize the loss function. The loss function may be used as an indicator to determine optimal model parameter during the learning process of an artificial neural network.

Machine learning may be classified into supervised learning, unsupervised learning, and reinforcement learning depending on the learning method.

Supervised learning refers to a method of training an artificial neural network with a label for the learning data given, a label may mean the correct answer (or result value) that the artificial neural network must infer when learning data is input to the artificial neural network.

Unsupervised learning may refer to a method of training an artificial neural network in a state where no label for training data is given.

Reinforcement learning may refer to a learning method in which an agent defined within an environment learns to select an action or action sequence that maximizes the cumulative reward in each state.

Among artificial neural networks, machine learning implemented with a deep neural network (DNN) that includes a plurality of hidden layers is also called deep learning, and deep learning is a part of machine learning.

Hereinafter, machine learning is used to include deep learning.

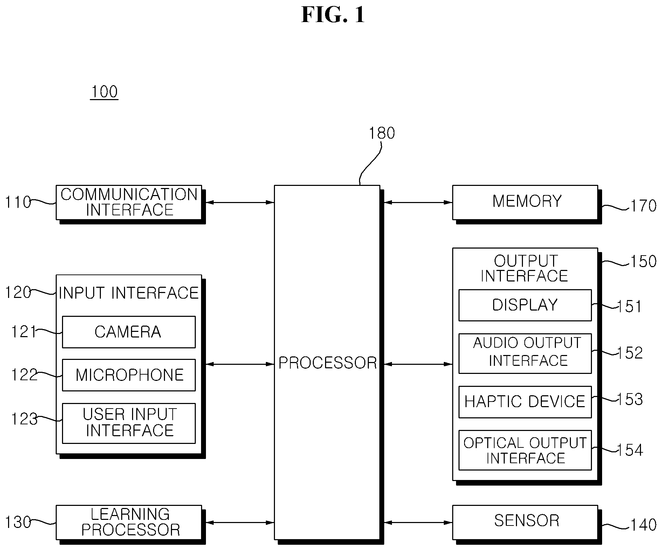

FIG. 1 is a block diagram for illustrating elements of an artificial intelligence device according to an embodiment of the present disclosure.

The artificial intelligence device 100 may be implemented as a fixed or movable device such as a TV, a projector, a mobile phone, a smartphone, a desktop computer, a laptop, a digital broadcasting terminal, a PDA (personal digital assistant), a PMP (portable multimedia player), a navigation, a tablet PC, a wearable device, and a set-top boxe(STB), a DMB receiver, a radio, a washing machine, a refrigerator, a desktop computer, a digital signage, a robot, a vehicle, etc.

Referring to FIG. 1, the artificial intelligence device 100 may include a communication interface 110, an input interface 120, a learning processor 130, a sensor 140, an output interface 150, a memory 170, and a processor 180.

The communication interface 110 may transmit and receive data with external device such as other artificial intelligence device or the AI server 200 using wired or wireless communication technology. For example, the communication interface 110 may transmit and receive sensor information, user input, learning model, and control signal with external device.

Communication technologies used by the communication interface 110 include Global System for Mobile communication (GSM), Code Division Multi Access (CDMA), Long Term Evolution (LTE), 5G, Wireless LAN (WLAN), and Wireless-Fidelity (Wi-Fi). , Bluetooth (Bluetooth), RFID (Radio Frequency Identification), Infrared Data Association (IrDA), ZigBee, NFC (Near Field Communication), etc.

The input interface 120 may acquire various types of data.

The input interface 120 may include a camera 121 for capturing image, a microphone 122 for receiving audio signals, and a user input interface 123 for receiving information from a user.

The camera 121 or the microphone 122 is treated as a sensor, and the signal obtained from the camera 121 or the microphone 122 may be called sensing data or sensor information.

The input interface 120 may obtain training data for model learning and input data to be used when obtaining an output using the learning model. The input interface 120 may acquire unprocessed input data, and in this case, the processor 180 or the learning processor 130 may extract input feature by preprocessing the input data.

The camera 121 processes image frame such as still image or moving image obtained by an image sensor in video call mode or photographing mode. Processed image frame may be displayed on display 151 or stored in memory 170.

The microphone 122 processes external acoustic signal into electrical voice data. The processed voice data may be utilized in various ways depending on the function (or application being executed) being performed by the artificial intelligence device 100. Meanwhile, various noise removal algorithms may be applied to the microphone 122 to remove noise generated in the process of receiving an external acoustic signal.

The user input interface 123 is for receiving information from the user, when information is input through the user input interface 123, the processor 180 may control the operation of the artificial intelligence device 100 to correspond to the input information.

The user input interface 123 is a mechanical input means (or mechanical key, for example, a button, dome switch, jog wheel, or jog switch located on the front/rear or side of the artificial intelligence device 100). etc.) and a touch input means.

As an example, the touch input may consist of a virtual key, soft key, or visual key displayed on the touch screen through software processing, or a touch key placed in a part other than the touch screen.

The learning processor 130 may train a model composed of an artificial neural network using training data. The learned artificial neural network may be referred to as a learning model. A learning model may be used to infer a result value for new input data other than learning data, and the inferred value may be used as the basis for a decision to perform an operation.

The learning processor 130 may perform AI processing together with the learning processor 240 of the AI server 200.

The learning processor 130 may include memory integrated or implemented in artificial intelligence device 100. The learning processor 130 may be implemented using the memory 170, an external memory directly coupled to the artificial intelligence device 100, or a memory maintained in an external device.

The sensor 140 may obtain at least one of internal information of the artificial intelligence device 100, information on the surrounding environment of the artificial intelligence device 100, or user information using various sensors.

The sensor 140 may include at least one of a proximity sensor, an illumination sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar sensor, or a radar sensor.

The output interface 150 may generate output related to vision, hearing, or tactile sensation.

The output interface 150 may include a display 151 that outputs an image, an audio output interface 152 that outputs audio, a haptic device 153 that outputs tactile information, and an optical output interface 154 that outputs light.

The display 151 displays (outputs) information processed by the artificial intelligence device 100. For example, the display 151 may display execution screen information of an application running on the artificial intelligence device 100, or user interface (UI) and graphic user interface (GUI) information according to the execution screen information.

The display 151 may be implemented as a touch screen by forming a mutual layer structure or being integrated with the touch sensor. The touch screen functions as a user input interface 123 that provides an input interface between the artificial intelligence device 100 and the user, and may simultaneously provide an output interface between the artificial intelligence device 100 and the user.

The audio output interface 152 may output audio data received from the communication interface 110 or stored in the memory 170 in call signal reception, call mode or recording mode, voice recognition mode, broadcast reception mode, etc.

The audio output interface 152 may include at least one of a receiver, a speaker, or a buzzer.

The haptic device 153 generates various tactile effects that the user may feel. A representative example of a tactile effect generated by the haptic device 153 may be vibration.

The light output interface 154 uses light from the light source of the artificial intelligence device 100 to output a signal to notify that an event has occurred. Examples of events that occur in the artificial intelligence device 100 may include receiving a message, receiving a call signal, a missed call, an alarm, a schedule notification, receiving an email, receiving information through an application, etc.

The memory 170 may store data supporting various functions of the artificial intelligence device 100. For example, the memory 170 may store input data obtained from the input interface 120, learning data, learning model, learning history, etc.

The processor 180 may determine at least one executable operation of the artificial intelligence device 100 based on information determined or generated using a data analysis algorithm or a machine learning algorithm.

The processor 180 may control the elements of the artificial intelligence device 100 to perform the determined operation.

To this end, the processor 180 may request, search, receive, or utilize data from the learning processor 130 or the memory 170, and may control elements of the artificial intelligence device 100 to be performed an operation that is predicted or an operation that is determined to be desirable among the at least one executable operation.

If linkage with an external device is necessary to perform a determined operation, the processor 180 may generate a control signal to control the external device and transmit the generated control signal to the external device.

The processor 180 may obtain intent information for user input and determine the user's request based on the obtained intent information.

The processor 180 may obtain intent information corresponding to the user input using at least one of a STT (Speech To Text) engine for converting voice input into a character string or a Natural Language Processing (NLP) engine for acquiring intent information of natural language.

At least one of the STT engine and the NLP engine may be composed of at least a portion of an artificial neural network learned according to a machine learning algorithm. And, at least one of the STT engine or the NLP engine may be learned by the learning processor 130, learned by the learning processor 240 of the AI server 200, or learned by distributed processing thereof.

The processor 180 collects history information including the user's feedback on the operation of the artificial intelligence device 100 and stores it in the memory 170 or the learning processor 130 or the AI server 200, etc. May be transmitted to external devices. The collected historical information may be used to update the learning model.

The processor 180 may control at least some of the elements of the artificial intelligence device 100 to run an application program stored in the memory 170.

The processor 180 may operate two or more of the elements included in the artificial intelligence device 100 in combination with each other in order to run the application program.

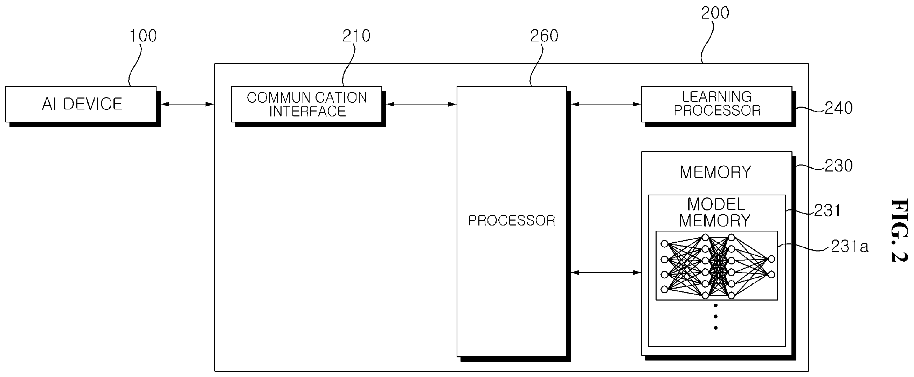

FIG. 2 is a diagram for illustrating the configuration of an artificial intelligence server according to an embodiment of the present disclosure.

Referring to FIG. 2, the AI server 200 may refer to a device that trains an artificial neural network using a machine learning algorithm or uses a learned artificial neural network.

The AI server 200 may be composed of a plurality of servers to perform distributed processing, and may be defined as a 5G network. The AI server 200 may be included as a part of the artificial intelligence device 100 and may perform at least part of the AI processing.

The AI server 200 may include a communication interface 210, a memory 230, a learning processor 240, and a processor 260.

The communication interface 210 may transmit and receive data with an external device such as the artificial intelligence device 100.

The memory 230 may include a model memory 231. The model memory 231 may store a model (or artificial neural network, 231a) that is being trained or has been learned through the learning processor 240.

The learning processor 240 may train the artificial neural network 231a using training data. The learning model may be used while mounted on the AI server 200 of the artificial neural network, or may be mounted and used on an external device such as the artificial intelligence device 100.

The learning model may be implemented in hardware, software, or a combination of hardware and software. When part or all of the learning model is implemented as software, one or more instructions constituting the learning model may be stored in the memory 230.

The processor 260 may infer a result value for new input data using a learning model and generate a response or control command based on the inferred result value.

Hereinafter, a user may be referred to an audience to whom an advertisement is provided.

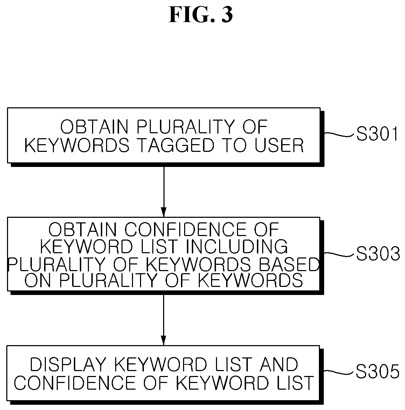

FIG. 3 is a flowchart for explaining an operation method of a device according to an embodiment of the present disclosure.

Hereinafter, the confidence of a keyword may be referred to as a confidence score or a weight. The confidence may be an indicator of how much the keyword matches the user's actual interest or behavioral characteristic.

Additionally, the confidence of a keyword list may be an indicator of how well a keyword list containing a plurality of keywords matches the user's actual interest or behavioral characteristic.

A keyword is a word or combination of words tagged to a user for the purpose of providing targeted advertisement, and may be, but is not limited to, a name of an advertised product, a brand name, an attribute of a product, a type of product, a characteristic of a product, or an attribute of a user.

The device 100-1 may be an example of the artificial intelligence device 100 illustrated in FIG. 1. The device 100-1 may include all components of the artificial intelligence device 100 illustrated in FIG. 1.

The device 100-1 may be equipped with a processor 180, and more than one processor 180 may be equipped.

Referring to FIG. 3, the processor 180 of the device 100-1 may obtain a plurality of keywords tagged to the user (S301).

A user may be tagged with one or more keywords. The keyword tagging process may be performed by an advertiser.

In one embodiment, the keyword may be tagged based on a response to a survey provided to the user at the request of the advertiser. The survey may be provided as a video via a display 151. The response to the survey may be an input for selecting specific item, and the keyword corresponding to the selected specific itemsmay be tagged to the user.

The user may be tagged with one or more keywords in response to the survey.

In another embodiment, the keyword may be tagged based on an action related to the advertisement video. The action related to the advertisement video may be any one of the following: an action of watching the advertisement video, an action of replaying the advertisement video after the advertisement video has finished playing, and an action of providing an interest response (e.g., selecting a like button) to the advertisement video. One or more keywords may be tagged to the user based on the action related to the advertisement video.

The processor 180 may receive a plurality of keywords tagged to the user from a server 200-1 that provides an advertisement platform to be described later through a communication interface 110.

The processor 180 of the device 100-1 may obtain the confidence of a keyword list including the plurality of keywords based on the obtained plurality of keywords (S303).

The processor 180 may obtain the confidence of each of a plurality of keywords, and may obtain the confidence of the keyword list including the plurality of keywords based on the obtained confidence.

The confidence of the keyword may be referred to as an unit confidence (or an individual confidence), and the confidence of the keyword list may be referred to as a list confidence.

In one embodiment, the processor 180 may calculate the confidence of each keyword based on the user's behavior (or behavior data). The processor 180 may assign the confidence to the keyword based on at least one of the user's response pattern to a content or the user's dwell time on the content.

For example, the processor 180 may assign the confidence to the keyword based on the user's behavior related to the survey.

The processor 180 may increase the confidence of the keyword corresponding to a specific question if a selection for the specific question of the survey and a submission of the survey are received within a predetermined time. The processor 180 may decrease the confidence of the keyword corresponding to the specific question if a selection for the specific question of the survey and the submission of the survey are not received within the predetermined time.

The processor 180 may increase the confidence of a keyword corresponding to a selected item if a decision on the selected item is not changed before submitting the survey. The processor 180 may decrease the confidence of a keyword corresponding to a selected item if the decision on the selected item is changed before submitting the survey.

As another example, the processor 180 may assign confidence to the keyword based on a user's behavior related to an advertisement video.

The processor 180 may increase the confidence of the keyword corresponding to the advertisement video if the dwell time of the advertisement video is longer than a predetermined time after the advertisement video ends. The keyword corresponding to the advertisement video may be any one of a title of the advertisement video, a product name of the advertisement video, and a brand name of a company selling the product of the advertisement video.

The processor 180 may decrease the confidence of the keyword corresponding to the advertisement video if the user leaves the screen within the predetermined time after a reward for viewing the advertisement video is paid or if no interest response is entered.

In another embodiment, the processor 180 may measure the confidence of the keyword based on a time. The processor 180 may increase the confidence of a recently tagged keyword and decrease the confidence of a keyword that was tagged a long time ago. The processor 180 may measure the confidence of the keyword using a weighting function designed to decrease the confidence over the time. The weighting function may be either an exponential decay function or a linear decay function.

In another embodiment, the processor 180 may set the confidence of the keyword according to user settings. The processor 180 may obtain an individual confidence of the keyword according to a user input for setting the confidence.

In another embodiment, the processor 180 may assign a high confidence to similar keywords included in the keyword list. The processor 180 may measure a similarity between a first keyword and a second keyword included in the keyword list, and if the measured similarity is greater than a predetermined similarity, the processor may assign the high confidence to each of the first keyword and the second keyword. A method for measuring the similarity between keywords will be described later.

In one embodiment, the processor 180 may obtain an average of the confidences of each of the plurality of keywords included in the keyword list as the confidence of the keyword list.

In another embodiment, the processor 180 may determine the confidence of the keyword list based on a correlation (or a similarity) between the plurality of keywords included in the keyword list. The processor 180 may increase the confidence of the keyword list as the number of similar keywords in the keyword list increases, and may decrease the confidence of the keyword list as the number of dissimilar keywords in the keyword list increases.

The processor 180 may measure the similarity between any two keywords included in the keyword list, and determine the average of the measured similarities as the confidence of the keyword list.

The similarity measurement method between keywords may be any of a keyword vectorization measurement method, a knowledge graph-based measurement method, or a text embedding measurement method.

The keyword vectorization measurement method may be a method of converting each keyword into a vector and measuring the similarity between the converted vectors. The processor 180 may convert the keyword into the vector using any one of a TF-IDF (Term Frequency-Inverse Document Frequency) method, a word embedding method, or a sentence embedding method.

The TF-IDF method may be a method that converts an importance of each keyword into the vector by quantifying a frequency of appearance of the keyword in a given text and an inverse frequency in an entire document.

The word embedding may be a way to reflect semantic similarity between keywords by representing them as a dense vector in a high-dimensional semantic space.

The sentence embedding may be a method of converting a sentence into a high-dimensional vector by considering contextual information of an entire sentence rather than at a level of a single keyword.

The processor 180 may obtain a cosine similarity of vectors, a Jaccard similarity of vectors, or an Euclidean distance-based similarity of vectors as the similarity between keywords, and may adjust the confidence between keywords depending on whether the obtained similarity is higher than a predetermined similarity.

The knowledge graph-based measurement method may be a method of measuring the similarity between keywords by utilizing a relationship between keywords and a graph structure. In a knowledge graph, one keyword may be one node, and one node may be connected to another node by an edge. The edge may represent a relationship between nodes.

The processor 180 may measure the similarity between keywords based on at least one of the number of other nodes connected to one node or the number of edges. For example, the processor 180 may determine that the similarity between keywords is greater than a predetermined similarity if the keywords include a common connection node greater than a reference number.

In another embodiment, the processor 180 may measure the confidence between keywords using a text embedding measurement method. The text embedding measurement method may be a method of measuring the confidence of keywords by analyzing a semantic similarity, an importance, a relationship, etc. of text data through an AI model (e.g., an LLM model). The text embedding measurement method may be a method of converting each keyword or a document in which the keyword appears into a high-dimensional vector, calculating the similarity between the converted high-dimensional vectors, and reflecting contextual importance or data quality as a weight to the calculated similarity to measure a final similarity of the keyword.

The processor 180 of the device 100-1 may display the keyword list and the confidence of the keyword list on the display 151 (S305).

The processor 180 may display the keyword list including a plurality of keywords tagged to the user, the confidence of each of the plurality of keywords, and the confidence of the keyword list on the display 151.

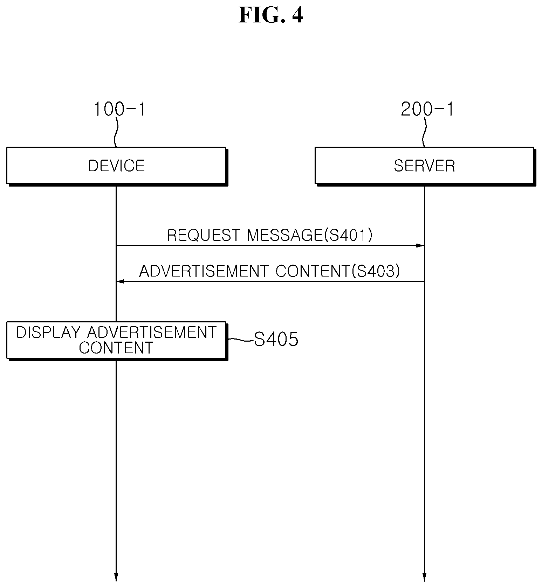

FIG. 4 is a sequence diagram illustrating an operation method of a system according to an embodiment of the present disclosure.

In FIG. 4, the server 200-1 may be an example of the AI server 200 of FIG. 2. The server 200-1 may be referred to as an advertisement platform server that provides an advertisement service.

FIG. 4 may be performed after step S305 of FIG. 3.

The processor 180 of the device 100-1 may request a request message requesting an advertisement content corresponding to any one of the plurality of keywords included in the keyword list to the server 200-1 through the communication interface 110 (S401).

The processor 180 may receive a command to select one of the plurality of keywords or a command related to a selected keyword, and may obtain the received command as a request message.

The processor 180 of the device 100-1 may receive the advertisement content corresponding to the keyword from the server 200-1 in response to transmission of the request message (S403) and display the received advertisement content on the display 151 (S405).

The server 200-1 may extract the advertisement content matching the keyword included in the request message and transmit the extracted advertisement content to the device 100-1.

The server 200-1 may recommend the advertisement content matching the keyword through either a content-based filtering method or a topic modeling method.

The content-based filtering method may be a method of extracting the advertisement content that has properties corresponding to the keyword requested by the audience by using information about the properties of the content held.

The topic modeling method may be a method of identifying a topic of interest to users based on keywords tagged to users and extracting the advertisement content matching the identified topic. The topic modeling method may be a method of classifying each keyword into a topic group representing the topic and modeling which topic group the keyword tagged to the user matches.

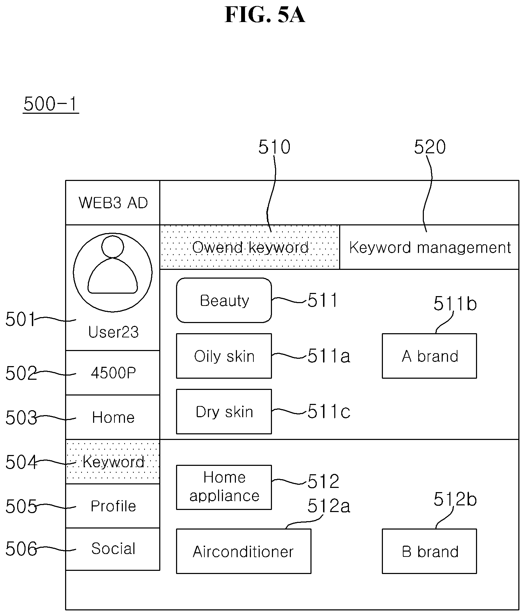

FIGS. 5A to 5H are drawings illustrating advertisement service screens provided to a user according to an embodiment of the present disclosure.

The following advertisement service screens may be displayed by an execution of an advertisement application installed on the device 100-1. The advertisement application may be an application for providing an advertisement service to the user based on keywords tagged to the user.

Referring to FIG. 5A, the first advertisement service screen 500-1 may include a user item 501, a reward item 502, a home item 503, a keyword item 504, a profile item 505, and a social item 506.

The user item 501 may be an item for identifying a user account.

The reward item 502 may be an item to show a profit received by the user.

The home item 503 may be an item for providing a home screen of an advertisement application.

The keyword item 504 may be an item for managing keywords held by the user.

The profile item 505 may be an item for providing the user's profile information.

The social item 506 may be an item for providing a linkage service with other users.

The first advertisement service screen 500-1 may be a screen in which the owned keyword tab 510, which is a sub-tab of the keyword item 504, is selected.

The first advertisement service screen 500-1 may provide information on keywords held by the user (user 23) by category. For example, a beauty category 511 may include keywords such as an oily skin 511a, a brand A 511b, and a dry skin 511c. In addition, a home appliance category 512 may include keywords such as an air conditioner 512a and a brand B 512b.

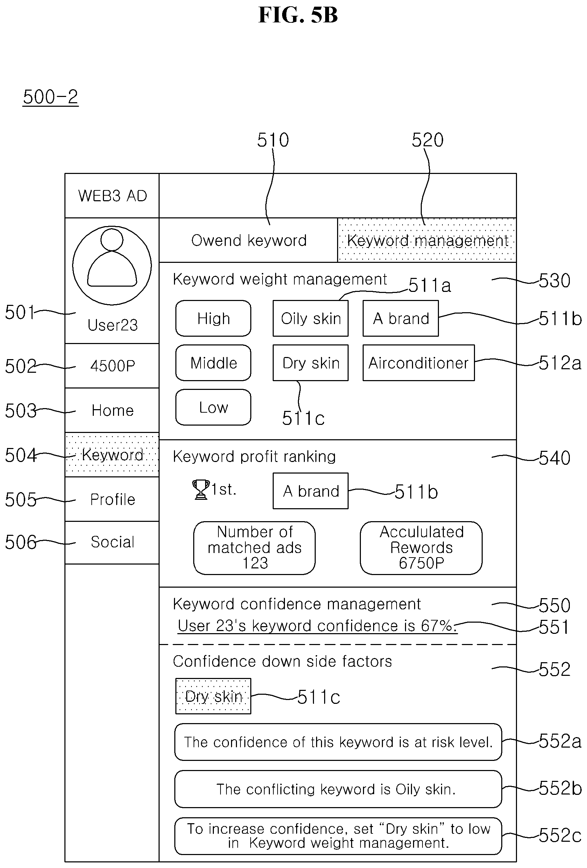

When a keyword management tab 520, which is another sub-tab of the keyword item 504, is selected, the processor 180 may switch the first advertisement service screen 500-1 to a second advertisement service screen 500-2 of FIG. 5B.

Some information included in the first advertisement service screen 500-1 may be displayed on the second advertisement service screen 500-2. The second advertisement service screen 500-2 may include a keyword weight management area 530, a keyword profit ranking area 540, and a keyword confidence management area 550.

The keyword weight management area 530 may be an area for providing and managing the confidence of the individual keyword. The confidence of the keyword may be classified into high/middle/low levels, but this is only an example and may also be classified into numerical ranges.

The keyword weight management area 530 may be an area for directly managing keywords currently held by the user. The user may directly set the confidence of the keyword included in the keyword weight management area 530, and thus a matching accuracy of the keywords may be improved. The confidence of the keyword set according to a user input may be transmitted to the server 200-1.

The processor 180 may readjust the confidence of the keyword list when the confidence of the individual keyword is set according to the user input.

Keywords corresponding to the high level may be the oily skin 511a and the A brand 511b. Keywords corresponding to the medium level may be the dry skin 511c and the air conditioner 512a.

The keyword profit ranking area 540 may be an area that provides revenue information generated through keywords held by the user, such as the number of advertisements matched and accumulated rewards.

The keyword confidence management area 550 may be an area for managing the confidence of a keyword list including the plurality of keywords 511a, 511b, 511c, 512a, 512b.

The keyword confidence management area 550 may include confidence information 551 and confidence decline factor information 552 of the keyword list including the plurality of keywords 511a, 511b, 511c, 512a, 512b held by the user.

The confidence information 551 of the keyword list may include the confidence (67%) of the keyword list.

The confidence decline factor information 552 may include an analysis result on the confidence decline factor of the keyword list. The confidence decline factor information 552 may include a keyword 511c indicating a cause of a confidence decline of the keyword list, a notification 552a indicating that the confidence of the keyword 511c is at a risk level, a description 552b of the keyword 551c, and a confidence management guide 552c of the keyword 511c.

When the confidence of the keyword list decreases, the processor 180 may display a notification 552a indicating that the confidence has decreased on the display 151.

When the confidence of the keyword list decreases, the processor 180 may further display, on the display 151, a notification that includes the cause of the decrease, the keyword that caused the decrease, and a guide for adjusting the confidence of the keyword that caused the decrease to the low level. The keyword that caused the decrease may be identified in various forms (such as a highlight box).

The keyword confidence management area 550 may be an area where a notification is displayed when the confidence of the keyword list decreases.

The confidence management guide 552c may include a guide text to adjust the confidence of the keyword 511c to a low level within the keyword weight management area 530 to increase the confidence of the keyword list.

The processor 180 may measure the similarity between the plurality of keywords 511a, 511b, 511c, 512a, 512b through a large language model (LLM) to derive the keyword 511c that conflicts with a user's taste preference.

The user may increase the confidence of the keyword list by adjusting the confidence of the keyword 511c from a medium level to a low level. The processor 180 may adjust the individual confidence of each keyword according to a user input for adjusting the confidence of the keyword.

According to an embodiment of the present disclosure, a validity of a combination of keywords may be evaluated as the confidence of the keyword list including the plurality of keywords is provided together.

According to an embodiment of the present disclosure, since the confidence of the individual keyword and the confidence of the keyword list including the plurality of keywords is provided together, even when the confidence of the keyword list is low, an ineffective keyword may be selectively replaced or removed by referring to the confidence of the individual keyword, so that the efficiency of target advertisement may be increased.

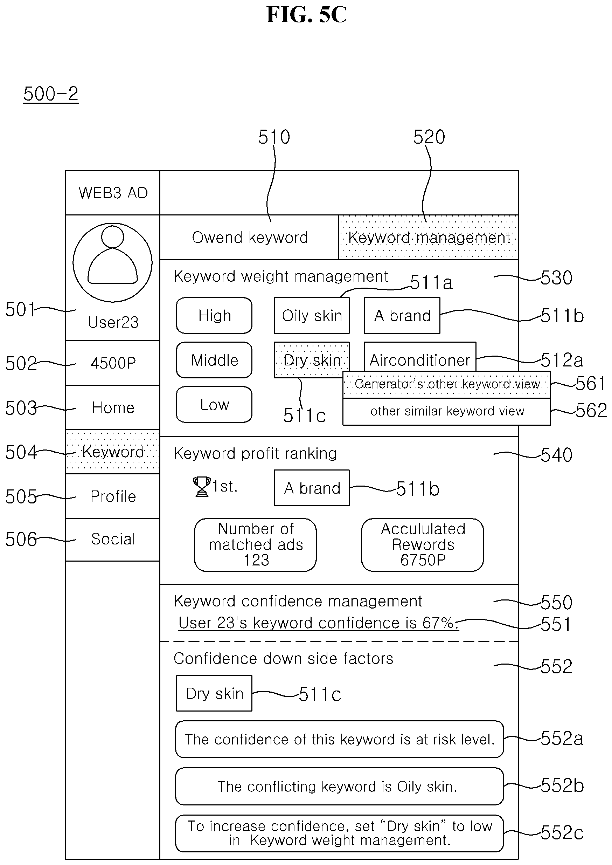

Referring to FIG. 5C, the processor 180 may display a keyword view pop-up window 560 when the keyword 511c "dry" is selected on the advertisement service screen 500-2.

The keyword view pop-up window 560 may include other keyword view item of a generator 561 and other similar keyword view item 562.

The other keyword view item of the generator 561 may be an item for providing other keywords created by the generator who created the keyword 511c. The generator may be an advertiser. The other similar keyword view item 562 may be an item for providing keywords similar to the keyword 511c.

The processor 180 may display keywords similar to the keyword 511c on the display 151 based on a selection of other similar keyword view item 562. The processor 180 may include the selected keyword in the keyword list according to a command to select one of the similar keywords.

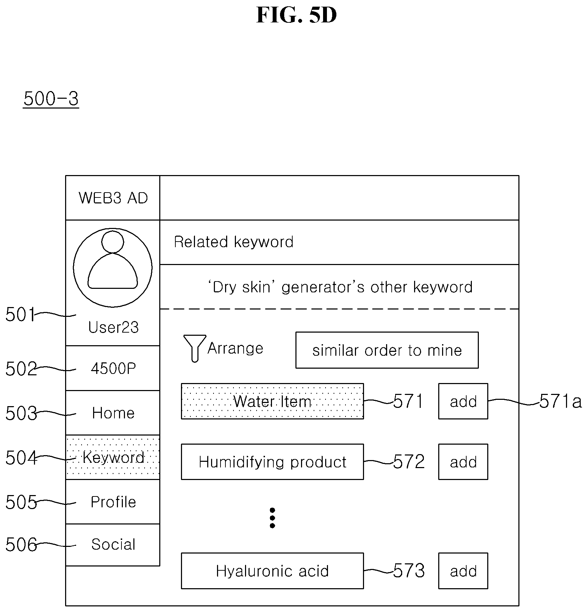

When the other keyword view item of the generator 561 is selected, the processor 180 may display a third advertisement service screen 500-3 as shown in FIG. 5D on the display 151.

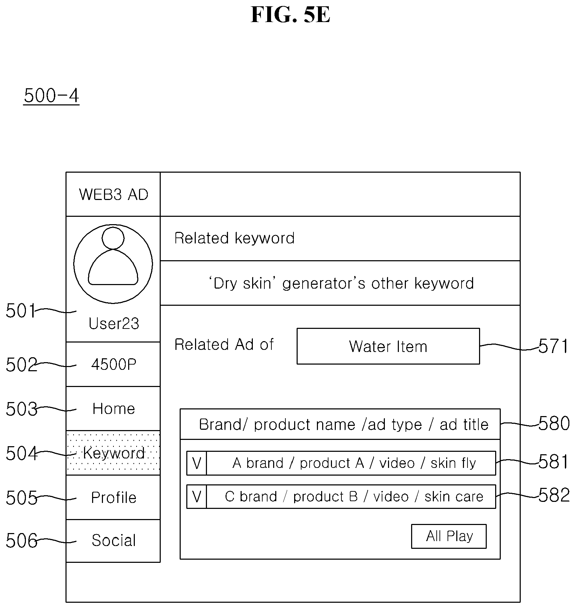

The third advertisement service screen 500-3 may include other keywords 571, 572, 573 of the generator who created the selected keyword 511c. When a specific keyword 571 is selected among the other keywords 571, 572, 573, the processor 180 may display a fourth advertisement service screen 500-4 on the display 151 to provide advertisement information 580 related to the selected specific keyword 571, as illustrated in FIG. 5E.

The advertisement information 580 may include advertisement content items 581, 582 related to the specific keyword 571. Each advertisement content item may include a brand name, a product name, a type of an advertisement content, and a title of an advertisement.

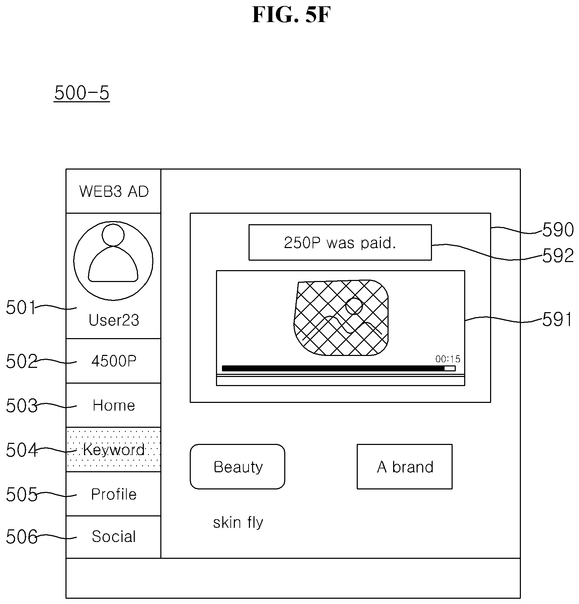

When one of the advertisement content items 581, 582 is selected, the processor 180 may display a fifth advertisement service screen 500-5 including an advertisement playback area 590 on the display 151, as shown in FIG. 5F.

The advertisement playback area 590 may include an advertisement video 591 and a reward point 592 provided based on viewing of the advertisement video 591.

When a playback of the advertisement video 591 is terminated, the processor 180 may register the specific keyword 571 in the user's keyword list. That is, the processor 180 may include the specific keyword 571 in the keyword list.

As another example, an additional button 571a may be further displayed at one side of the specific keyword 571 of FIG. 5D. The processor 180 may register the specific keyword 571 in the keyword list according to a command for selecting the additional button 571a.

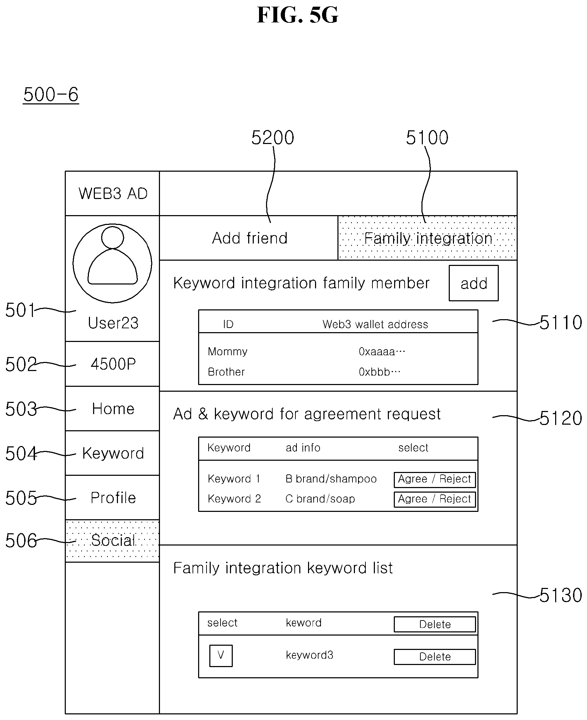

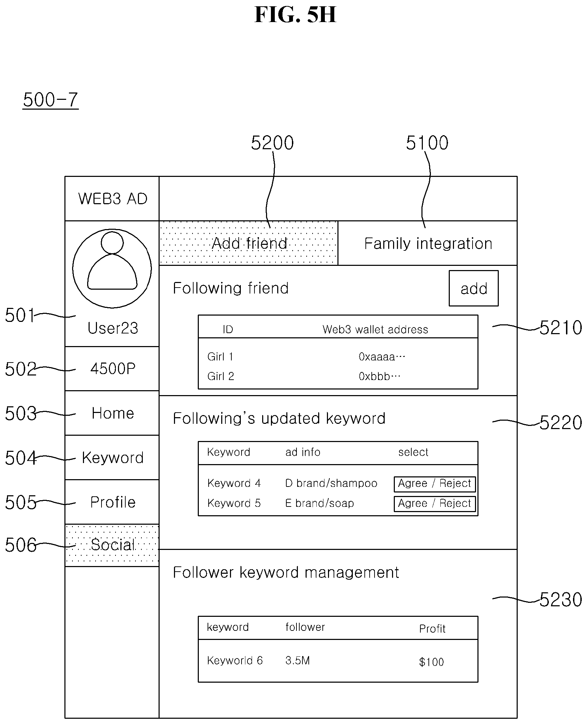

Next, Figs. 5G and 5H are described.

Referring to FIG. 5G, the processor 180 may display a sixth advertisement service screen 500-6 according to the selection of a family bonding tab 5100, which is a sub-tab of the social item 506. The sixth advertisement service screen 500-6 may be a screen for managing keywords held by the user's family.

The sixth advertisement service screen 500-6 may include a user's family information area 5110, an agreement request area 5120, and a family intergration keyword list area 5130.

The user's family information area 5110 may include information about the user's family members for keyword combination. Information about each family member may include a family member's ID and a wallet address. The wallet address may be an address that may receive a reward through a blockchain.

The agreement request area 5120 may include a consensus request for a keyword received from the user's family member and advertisement matching the keyword. The consensus request may be a request to jointly register the keyword in the user's keyword list.

The family intergration keyword list area 5130 may include a family intergration keyword list that includes keywords jointly registered between the user and family members.

In this way, keywords held by family members may be registered in the user's keyword list. The processor 180 may adjust the confidence of the keyword list as the family member's keyword is added to the keyword list.

Referring to FIG. 5H, the processor 180 may display a seventh advertisement service screen 500-7 according to the selection of the add friend tab 5200, which is a sub-tab of the social item 506. The seventh advertisement service screen 500-7 may be a screen for managing keywords of friends followed by the user through the user and a social network service application.

The seventh advertisement service screen 500-7 may include a friend information area 5210, a friend update keyword area 5220, and a friend keyword management area 5230.

The friend information area 5210 may include information about a friend followed by the user. The information about the friend may include the friend's ID and the friend's wallet address.

The friend update keyword area 5220 may include updated keywords of friend followed by the user.

The friend keyword management area 5230 may include information about keywords held by friends followed by the user.

Keywords held by friends that the user follows may be registered to the user's keyword list. The processor 180 may adjust the confidence of the keyword list as the friend's keywords is added to the keyword list.

In one embodiment, the processor 180 may not decrease the confidence of the keyword list even if a similarity between keywords jointly registered (or tagged) by the user and a family member or followed friend and keywords that the user already has is below a predetermined similarity. This is because the jointly registered keywords may have sufficient confidence based on the confidence of the family member or friend, or may be determined to be normal keyword registration for new expansion purposes even if they are different from the user's existing keywords.

However, in order for a user and a family member or friend to jointly register a keyword, the confidence of the keyword to be jointly registered must be higher than a threshold confidence for either the user or the family member (or friend). This is to prevent a decrease in the confidence of the keyword list through a combination of keywords, thereby preventing misuse of the keyword list.

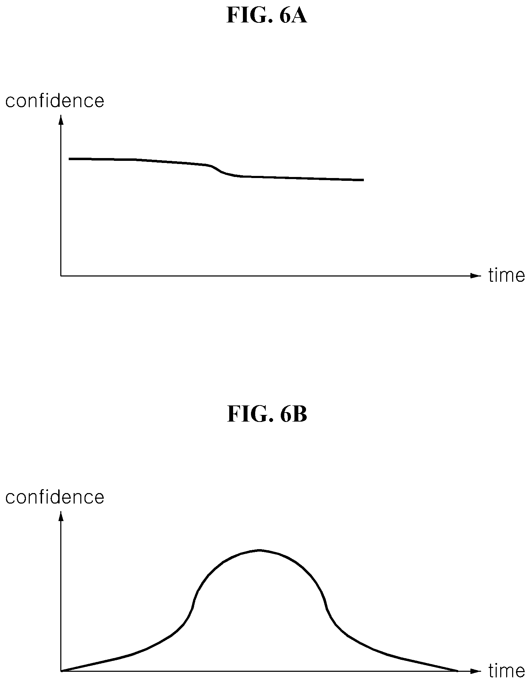

FIGS. 6A and 6B are diagrams showing changes in keyword confidence over time.

A keyword may be classified as either a constant keyword or a spot keyword.

The constant keyword may be a keyword whose confidence is not sensitive to changes in time, as illustrated in Fig. 6A. For example, the constant keyword may be a keyword whose confidence may remain constant over time, such as a dryness or an oiliness of the skin.

The spot keyword may be a keyword whose confidence is sensitive to a time change, as shown in Fig. 6B. For example, the spot keyword may be a keyword whose confidence fluctuates rapidly due to a seasonal change, such as a dehumidifiers and an air conditioner.

If the keyword is the spot keyword and the confidence of the spot keyword is less than a threshold confidence, the processor 180 may not use the confidence of the spot keyword to calculate the confidence of the keyword list. In addition, if the keyword is the spot keyword and the confidence of the spot keyword is less than the threshold confidence, the processor 180 may not transmit a request message for advertisement content related to the keyword to the server 200-1.

This is to prevent the confidence of the keyword list from being lowered due to a decrease in an advertisement quality based on confidence or by exploiting the spot keyword.

Meanwhile, the processor 180 may adjust the confidence of the keyword list when a new keyword is included or excluded from the keyword list. When the new keyword is included in the keyword list, the processor 180 may measure the confidence of the keyword list based on the similarity between the new keyword and existing keywords. When the keyword is removed from the keyword list, the processor 180 may measure the confidence of the keyword list based on the similarity between the remaining keywords.

The processor 180 may increase the confidence of the keyword list, for example, when the similarity between the new keyword and the existing keyword increases, and may decrease the confidence of the keyword list when the similarity between the new keyword and the existing keyword decreases.

As another example, the processor 180 may adjust the confidence of the keyword list when the individual confidence of a keyword included in the keyword list changes. The confidence of the keyword may be changed depending on a user's behavior. The user's behavior may be either a behavior related to the above-described survey or the user's behavior related to the advertisement video.

For example, the processor 180 may decrease the confidence of the keyword list if the keyword list includes a first keyword and a second keyword and the confidence of the second keyword is decreased. As another example, the processor 180 may increase the confidence of the keyword list if the keyword list includes the first keyword and the second keyword and the confidence of the second keyword is increased.

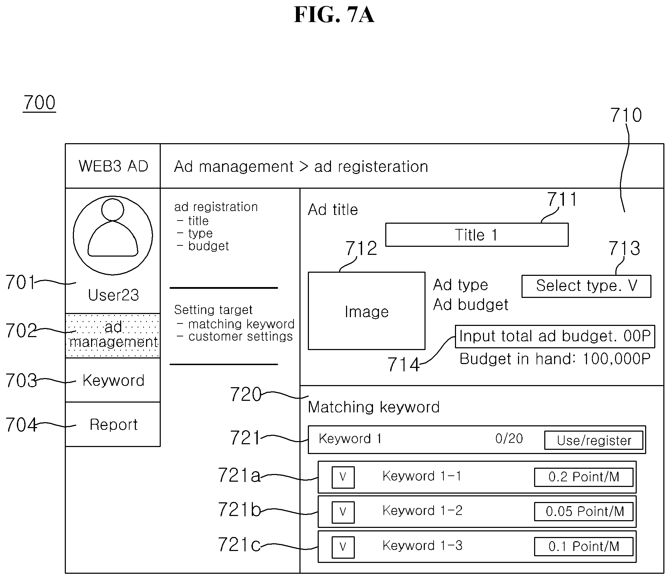

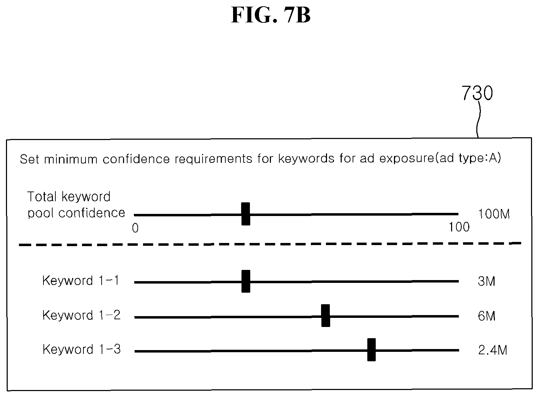

FIGS. 7A and 7B are drawings illustrating an advertiser screen according to an embodiment of the present disclosure.

Referring to FIG. 7A, the advertiser screen 700 may include an advertiser item 701, an advertisement management item 702, a keyword item 703, and a report item 704.

The advertiser item 701 may be an item for providing information about an advertiser.

The advertisement management item 702 may be an item for setting a keyword and a customer (or an audience) to target an advertisement provided by the advertiser.

The keyword item 703 may be an item for managing keywords tagged to the customer.

The report item 704 may be an item for providing a report on an advertisement service.

In FIG. 7A, it is assumed that the advertisement management item 702 is selected. The advertiser screen 700 may include an advertisement area 710 and a matching keyword area 720.

The advertisement area 710 may include information about an advertisement provided in response to a matching keyword. The advertisement area 710 may include an advertisement title 711, an advertisement video 712, an advertisement type 713, and an advertisement budget 714.

The matching keyword area 720 may be an area for registering keywords to be matched to an advertisement. The matching keyword area 720 may include a keyword list 721 and individual keywords (keyword 1-1, keyword 1-2, keyword 1-3) included in the keyword list 721.

Meanwhile, as illustrated in FIG. 7B, when registering the matching keyword, a setting menu 730 for setting the confidence of each of an individual keyword and a keyword list (entire keyword pool) corresponding to the advertisement exposure target may be additionally displayed on the advertiser screen 700.

The setting menu 730 may include the confidence of the entire keyword pool, the number of advertisement exposure targets for the entire keyword pool (100M), the confidence of a first individual keyword (keword 1-1) and the number of advertisement exposure targets (3M), the confidence of a second individual keyword (keword 1-2) and the number of advertisement exposure targets (6M), and the confidence of a third individual keyword (keword 1-3) and the number of advertisement exposure targets (2.4M).

The user may set the confidence of the entire keyword pool or the confidence of the individual keyword by inputting the number of advertisment exposure targets in the setting menu 730.

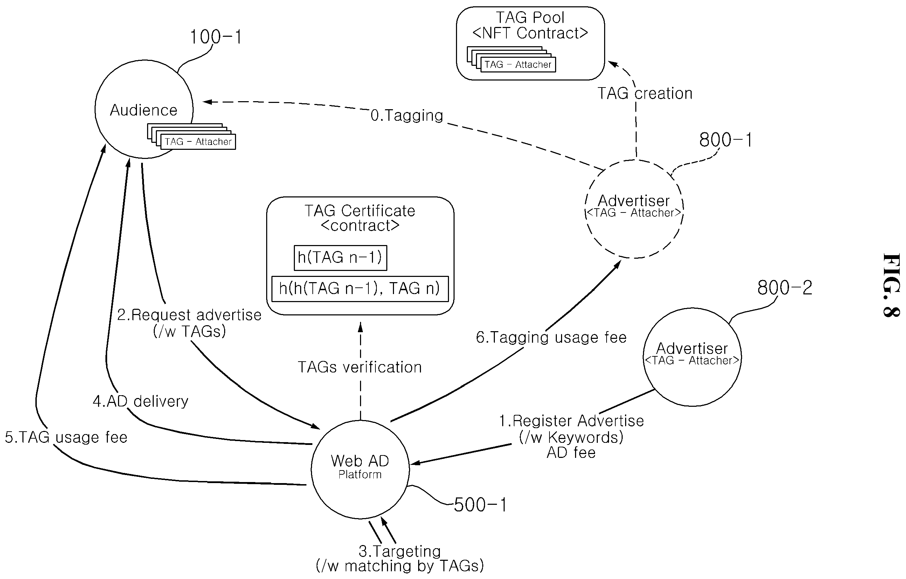

FIG. 8 is a drawing for explaining a method for providing a target advertisement service according to one embodiment of the present disclosure.

Hereinafter, the audience may correspond to a device 100-1, a Web3 AD platform may correspond to the server 200-1, and the advertiser may correspond to an advertiser server. The advertiser may be referred to as a TAG attacher in that it tags the keyword to the audience.

Hereinafter, the keyword may be referred to as a tag or a keyword tag.
0. A first advertiser server 800-1 may tag an audience with one or more keywords and transmit the tagged keyword to the device 100-1. The first advertiser server 800-1 may issue a tag list including a plurality of tagged keywords and transmit the issued tag list to the device 100-1. The tag list may be a keyword list.
1. A second advertiser server 800-2 may provide an advertisement content and an advertisement fee to the server 200-1.
2. The device 100-1 may transmit a request message requesting the tag list and the advertisement content to the server 200-1. The tag list may be the keyword list including a plurality of keywords tagged to the audience.
3. The server 200-1 may extract advertisement contents matching the tag list received from the device 100-1.
4. The server 200-1 may transmit the extracted advertisement contents to the device 100-1.
5. The server 200-1 may provide a reward (TAG usage fee, personal information usage fee) according to the use of the tag list to the device 100-1.
6. The server 200-1 may provide a tagging usage fee to the first advertiser server 800-1 that has tagged the audience's keyword.

Meanwhile, the server 200-1 may verify the confidence of tags received from the device 100-1.

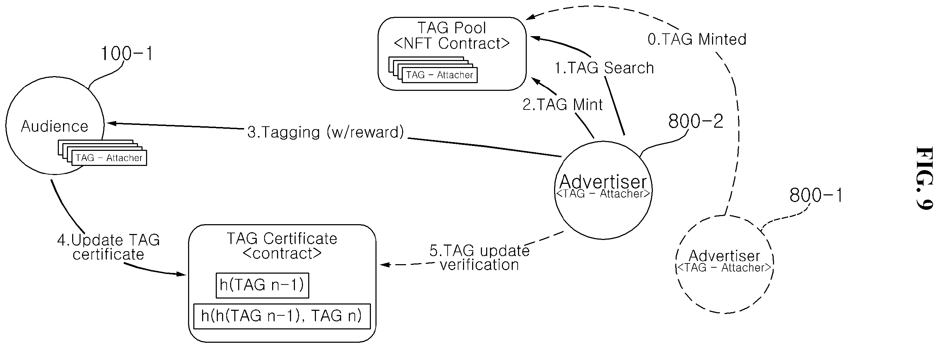

FIG. 9 is a diagram for explaining a method for ensuring a confidence of a keyword tagged to an audience according to one embodiment of the present disclosure.

0. The first advertiser server 800-1 may mint (or issue) a tag, and the minted tag may be included in a tag pool. The tag pool may include a plurality of tags minted by the advertiser or a participant tagging the keywords or a plurality of hash values corresponding to each of the plurality of tags, and each tag may be issued as a Non-Fungible Token (NFT).

The TokenId of the NFT may be generated as a hash value of the keyword (TokenId=hash(keyword)). The first advertiser server 800-1 may convert the keyword to be generated into the hash value and check whether the converted hash value exists in the tag pool.

findKeyword(f_keyword, TokenID) = (hash(f_keyword) == TokenID)
1. The second advertiser server 800-2 may search for a desired tag.
2. The second advertiser server 800-2 may mint a tag if the desired tag is not found.
3. The second advertiser server 800-2 may transmit a question/survey to the device 100-1 for tagging, and upon receiving a response to the question/survey, may provide a reward to the device 100-1. The second advertiser server 800-2 may tag the audience with a keyword based on the received response. The device 100-1 may store the keyword received from the second advertiser server 800-2.
4. The device 100-1 may update a keyword certificate (Keyword Certificate) through a contract by combining information of a new keyword with a hash value (h(TAG n-1)) corresponding to a previously stored keyword, and transmit the updated keyword certificate to the server 200-1. The updated keyword certificate may include an updated hash value (h(h(TAG n-1), TAG n)) corresponding to a combination of a hash value (h(TAG n-1)) corresponding to a previously stored keyword and information of a new keyword (TAG n).
5. The server 200-1 may verify whether the keyword is normally assigned to the audience based on the updated keyword certificate received from the device 100-1. The server 200-1 may receive updated tag information from the second advertiser server 800-2. The updated tag information may include a hash value updated by tagging.

The server 200-1 may verify an authenticity of the keyword by comparing the hash value included in the updated keyword certificate with the hash value included in the updated tag information.

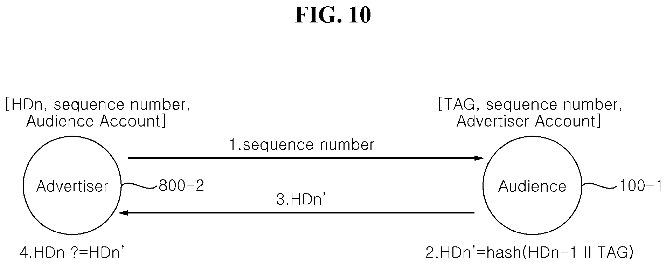

FIG. 10 is a diagram for explaining a method for maintaining a confidence of a keyword tagged to an audience according to one embodiment of the present disclosure.

At the time of updating the keyword to the audience, each of the device 100-1 and the second advertiser server 800-2 may store the following value.
Audience: [Keywords(or TAGs), sequence number, Advertiser account]
Advertiser: [Audience account, HDn, sequence number]

That is, the device 100-1 may store keywords, a sequence number, and an advertiser account, and the second advertiser server 800-2 may store an audience account, a updated first hash value (HDn), and a sequence number.
1. The second advertiser server 800-2 may transmit the sequence number to the device 100-1.
2. The device 100-1 may extract a second hash value (HDn') corresponding to the received sequence number.
3. The device 100-1 may transmit the second hash value (HDn') to the second advertiser server 800-2.
4. The second advertiser server 800-2 may compare whether the updated first hash value (HDn) and the second hash value (HDn') are the same, and if they are the same, it may be determined that the confidence of keywords is maintained.

If the device 100-1 does not have all of the tagged a plurality of keywords, the same hash value cannot be generated. That is, the fact that the same hash value may be generated proves that the device 100-1 has all of the tagged the plurality of keywords.

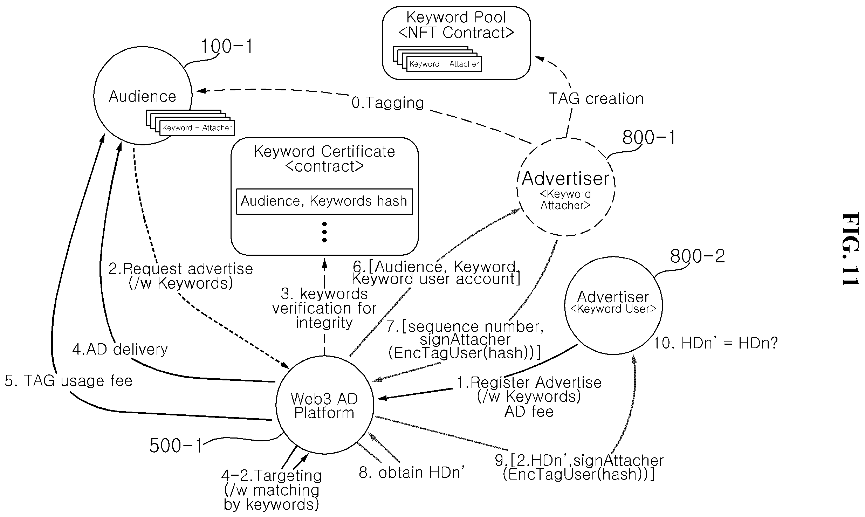

FIG. 11 is a diagram illustrating a method for verifying whether an advertisement provided according to one embodiment of the present disclosure was sent to an audience having a keyword.

FIG. 11 may be an example of verifying whether the advertisement by an advertiser is sent to an audience that has a keyword matching the advertisement.

Below, it is assumed that the server 200-1 may check the keyword information of the audience, and the advertiser server may check who the attacher of the keyword is through the tag pool.
0. The first advertiser server 800-1 may tag an audience with one or more keywords and transmit the tagged keywords to the device 100-1. The first advertiser server 800-1 may issue a tag list including a plurality of tagged keywords and transmit the issued tag list to the device 100-1. The tag list may be a keyword list.
1. The second advertiser server 800-2 may provide an advertisement content and an advertisement fee to the server 200-1.
2. The device 100-1 may transmit a request message requesting a tag list and advertisement content to the server 200-1. The tag list may be the keyword list including the plurality of keywords tagged to the audience.
3. Before providing a targeted advertisement, the server 200-1 may verify the confidence of the audience's keywords through the hash value corresponding to the audience stored in the keyword certificate contract.
4. After verifying the confidence of keywords, the server 200-1 may extract the advertisement content matching the keyword and transmit the extracted advertisement content to the device 100-1.
5. The server 200-1 may provide a reward (TAG usage fee, personal information usage fee) according to the use of the tag list to the device 100-1.
6. The server 200-1 may transmit a verification request to the first advertiser server 800-1 that has tagged the keyword of the audience to verify whether the audience has the corresponding keyword. The verification request may include tagging information including an audience account and keywords tagged to the audience.
7. The first advertiser server 800-1 may extract a sequence number corresponding to a keyword received through a search of a database and an advertiser hash value (SignAttacher(EncTagUser(hash))) generated by the advertiser, and transmit the extracted sequence number and the advertiser hash value to the server 200-1. The advertiser hash value may be a hashed value of the keyword when the advertiser tags the keyword to the audience.
8. The server 200-1 may sequentially hash the audience's keywords according to the sequence number received from the first advertiser server 800-1 to generate a hash value (HDn').
9. The server 200-1 may transmit the hash value (HDn') and the advertiser hash value (SignAttacher(EncTagUser(hash))) to the second advertiser server 800-2.
10. The second advertiser server 800-2 may decrypt the advertiser hash value (SignAttacher(EncTagUser(hash))) to generate a hash value (HDn) and verify whether the generated hash value (HDn) is identical to the hash value (HDn').

If a verification is successful, the first advertiser server 800-1 may be provided with a usage fee according to tagging every certain period (e.g., one month).

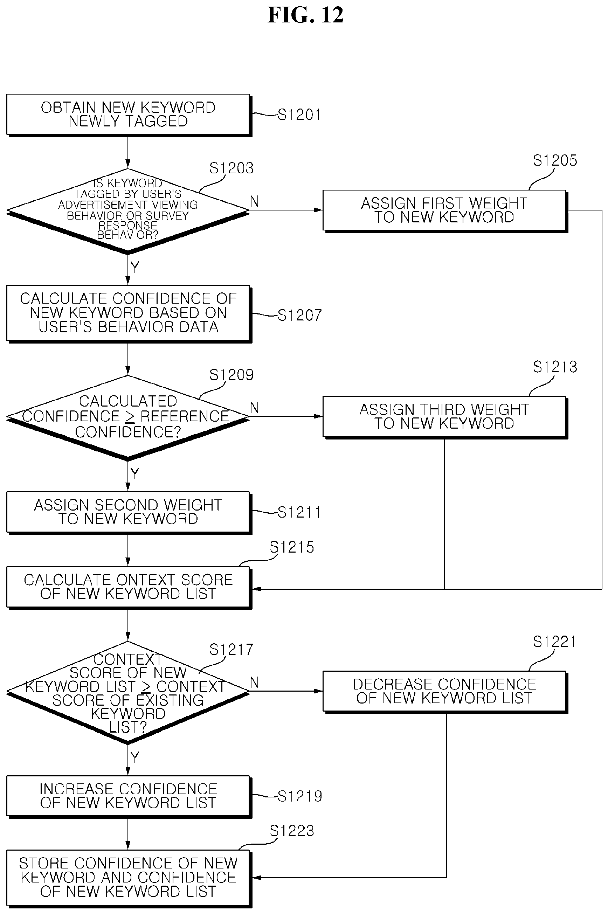

FIG. 12 is a flowchart for explaining an operation method of a device according to another embodiment of the present disclosure.

FIG. 12 may be an embodiment that concretizes the process of obtaining confidence of the individual keyword and the keyword list in the embodiment of FIG. 3.

The confidence of the keyword list may be updated when a new keywords is tagged by a user behavior, when the a weight of existing keyword s adjusted, or when the weight of an old keywords is adjusted at a preset interval.

Hereinafter, the new keyword list may be a list that includes the new keyword in the existing keyword list. The existing keyword list may include the plurality of keywords previously tagged to the user.

Referring to FIG. 12, the processor 180 of the device 100-1 may obtain a new keyword newly tagged to the user (S1201).

The processor 180 may determine whether the acquired new keyword is a keyword tagged by the user's advertisement viewing behavior or survey response behavior (S1203).

If the processor 180 determines that the acquired new keyword is not a keyword tagged by the user's advertisement viewing behavior or survey participation consent behavior, the processor 180 may assign a first weight to the new keyword (S1205).

The first weight may be a basic weight that is assigned by default.

For example, the processor 180 may assign a first weight to the new keyword if the new keyword is a keyword obtained through the family integration of FIG. 5G.

If the processor 180 determines that the acquired new keyword is a keyword tagged by the user's advertisement viewing behavior or survey participation consent behavior, the processor 180 may calculate the confidence of the new keyword based on the user's behavior data (S1207).

The method of calculating the confidence of the new keyword based on the user's behavior data is replaced with the description of step S303 of FIG. 3.

The processor 180 may determine whether the confidence of the generated new keyword is equal to or greater than a reference confidence (S1209).

The reference confidence may be the confidence that serves as a reference for assigning weight to the keyword.

If the confidence of the generated new keyword is equal to or greater than the reference confidence, the processor 180 may assign a second weight greater than the first weight to the new keyword (S1211).

Meanwhile, if the confidence of the generated new keyword is less than the reference confidence, the processor 180 may assign a third weight that is greater than the first weight and less than the second weight to the new keyword (S1213).

The processor 180 may calculate a context score of a new keyword list including a new keyword by applying the assigned second or third weight (S1215).

The context score of a keyword list may be a score indicating whether the keywords in the keyword list are semantically well connected.

The processor 180 may determine whether the context score of the new keyword list is equal to or greater than a context score of the existing keyword list (S1217).

If the processor 180 determines that the context score of the new keyword list is equal to or greater than the context score of the existing keyword list, the processor 180 may increase the confidence of the new keyword list (S1219).

If the processor 180 determines that the context score of the new keyword list is less than the context score of the existing keyword list, it may decrease the confidence of the new keyword list (S1221).

The processor 180 may store the confidence of the new keyword and the confidence of the new keyword list in the memory 170 (S1223).

A device 100-1 according to an embodiment of the present disclosure may may a display 151; a communication interface 110 configured to communicate with a server 200-1 providing an dvertisement; and a processor configured to: obtain a plurality of keywords tagged to a user, display a keyword list including the obtained plurality of keywords and a confidence of the keyword list generated based on the plurality of keywords on the display, and request an advertisement content corresponding to at least one keyword among the plurality of keywords to the server through the communication interface.

The processor 180 may determine the confidence of the keyword list based on a plurality of individual confidences corresponding to each of the plurality of keywords.

The processor 180 may obtain an individual confidence for each keyword based on at least one of the user's response pattern to a content or a dwell time on the content.

The processor 180 may determine the confidence of the keyword list based on the similarity between the plurality of keywords.

The processor 180 may increase the confidence of the keyword list based on a similarity between the plurality of keywords being greater than a predetermined similarity.

The processor 180 may, even if the similarity between a first keyword tagged only to the user among the plurality of keywords and a second keyword tagged jointly with other user is less than the predetermined similarity, does not decrease the confidence of the keyword list.

Either the confidence of the first keyword tagged to the user or the confidence of the second keyword tagged to the other user is greater than or equal to a threshold confidence.

The processor 180 may adjust the confidence of the keyword list based on whether a new keyword is added to the keyword list or an existing keyword is removed from the keyword list.

The processor 180 may, when the confidence of the keyword list decreases, display, on the display, a notification including a cause of a decrease, the keyword that caused the decrease, and a guide to adjust the confidence of the keyword that caused the decrease to a low level.

The processor 180 may display a plurality of individual confidences corresponding to each of the plurality of keywords and the confidence of the keyword list together on the display.

An individual confidence of each keyword may be classified as a high level, a medium level or a low level.

The processor 180 may adjust the individual confidence level of each keyword based on a user input.

The processor 180 may display a second keyword similar to a selected first keyword when the first keyword is selected from among the plurality of keywords, play a content corresponding to the second keyword, and include the second keyword in the keyword list when a playback of the content is finished.

The processor 180 may classify each of the plurality of keywords as a constant keyword whose individual confidence remains constant over time or a spot keyword whose individual confidence changes over time.

The processor 180 may, if the keyword is the spot keyword and the individual confidence is less than a threshold confidence, does not use the spot keyword to calculate the confidence of the keyword list.

The plurality of keywords are tagged based on the a response of the user to a survey provided by an advertiser.

The plurality of keywords are tagged by an behavior of the user in related to viewing a content.

The processor 180 may receive the advertisement content matching at least one keyword from the server in response to the request through the communication interface, and display the received advertisement content on the display.

In an embodiment of the present disclosure, the device 100-1 may include one or more memories 170 for storing commands and one or more processors 180 configured to execute commands for performing a method of operating the device 100-1.

The functions of the elements disclosed in the present invention may be implemented using circuits or processing circuits including general purpose processors, special purpose processors, integrated circuits, ASICs (application specific integrated circuits), conventional circuits and/or combinations thereof. A processor may be defined as a processing circuit or circuits including transistors and other circuits.

In the present invention, the circuits, units or means may be hardware designed or programmed to perform the specified function. The hardware may be the hardware disclosed in the present invention or other known hardware programmed or configured to perform the specified function. If the hardware is a processor which may be considered as a type of circuit, the circuits, means or units may be a combination of hardware and software, and the software may constitute hardware and/or a processor.

The above-described present disclosure may be implemented as a computer-readable code on a medium in which a program is recorded. The computer-readable medium includes all kinds of recording devices in which data that may be read by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device, and the like. In addition, the computer may include a processor 180 of an artificial intelligence device.

## Claims

1. A device (100-1), comprising:
a display (151) ;
a communication interface (110) configured to communicate with a server (200-1) providing an advertisement; and
a processor (180) configured to:
obtain a plurality of keywords tagged to a user,
display a keyword list including the obtained plurality of keywords and a confidence of the keyword list generated based on the plurality of keywords on the display (151), and
request an advertisement content corresponding to at least one keyword among the plurality of keywords to the server through the communication interface (110).

2. The device (100-1) of claim 1, wherein the processor (180) is further configured to:
determine the confidence of the keyword list based on a plurality of individual confidences corresponding to each of the plurality of keywords.

3. The device (100-1) of claim 2, wherein the processor (180) is further configured to:
obtain an individual confidence for each keyword based on at least one of the user's response pattern to a content or a dwell time on the content.

4. The device (100-1) of claim 1, wherein the processor (180) is further configured to:
determine the confidence of the keyword list based on the similarity between the plurality of keywords.

5. The device (100-1) of claim 4, wherein the processor (180) is further configured to:
increase the confidence of the keyword list based on a similarity between the plurality of keywords being greater than a predetermined similarity.

6. The device (100-1) of claim 5, wherein the processor (180) is further configured to:
even if the similarity between a first keyword tagged only to the user among the plurality of keywords and a second keyword tagged jointly with other user is less than the predetermined similarity, does not decrease the confidence of the keyword list.

7. The device (100-1) of claim 6, wherein either the confidence of the first keyword tagged to the user or the confidence of the second keyword tagged to the other user is greater than or equal to a threshold confidence.

8. The device (100-1) of claim 1, wherein the processor (180) is further configured to:
adjust the confidence of the keyword list based on whether a new keyword is added to the keyword list or an existing keyword is removed from the keyword list.

9. The device (100-1) of claim 1, wherein the processor (180) is further configured to:
when the confidence of the keyword list decreases, display, on the display, a notification including a cause of a decrease, the keyword that caused the decrease, and a guide to adjust the confidence of the keyword that caused the decrease to a low level.

10. The device (100-1) of claim 1, wherein the processor (180) is further configured to:
display a plurality of individual confidences corresponding to each of the plurality of keywords and the confidence of the keyword list together on the display.

11. The device (100-1) of claim 1, wherein the processor (180) is further configured to:
display a second keyword similar to a selected first keyword when the first keyword is selected from among the plurality of keywords,
play a content corresponding to the second keyword, and
include the second keyword in the keyword list when a playback of the content is finished.

12. The device (100-1) of claim 1, wherein the processor (180) is further configured to:
classify each of the plurality of keywords as a constant keyword whose individual confidence remains constant over time or a spot keyword whose individual confidence changes over time, and
if the keyword is the spot keyword and the individual confidence is less than a threshold confidence, does not use the spot keyword to calculate the confidence of the keyword list.

13. The device (100-1) of claim 1, wherein the plurality of keywords are tagged based on the a response of the user to a survey provided by an advertiser or by an behavior of the user in related to viewing a content.

14. The device (100-1) of claim 1, wherein the processor (180) is further configured to:
receive the advertisement content matching at least one keyword from the server in response to the request through the communication interface, and
display the received advertisement content on the display.

15. A method of operating a device (100-1), comprising
obtaining a plurality of keywords tagged to a user;
displaying a keyword list including the obtained plurality of keywords and a confidence of the keyword list generated based on the plurality of keywords; and
requesting an advertisement content corresponding to at least one keyword among the plurality of keywords to a server.
